Europäisches Patentamt

European Patent Office

Office européen des brevets

(19)

(11) **EP 1 031 428 A1**

(12) **EUROPEAN PATENT APPLICATION**

(43) Date of publication:
**30.08.2000 Bulletin 2000/35**

(51) Int Cl.⁷: **B41J 2/475**

(21) Application number: **99200495.2**

(22) Date of filing: **22.02.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **AGFA-GEVAERT N.V.**
**2640 Mortsel (BE)**

(72) Inventor: **Michielsen, Joseph**
**c/o Agfa-Gevaert N.V., RDM/IP-M**
**B-2640 Mortsel (BE)**

(54) **Method for recording on a heat mode imaging element**

(57)     A method for generating an image on a heat-mode imaging element (5), comprises three steps. The first step provides an exposure area (10) having a mainscan direction X and a subscan direction Y and also having a coherent light source (11). In a second step the heat mode imaging element is transported along the subscan direction Y through the exposure area. The third step of scanwise exposing the heat mode imaging element, comprises several substeps of: generating a writing beam from the light source, directing the writing beam onto the surface of the imaging element under an incidence angle AI defined by the refraction indexes of the media through which the writing beam travels, linearly polarising the writing beam in a plane PP parallel to the plane of incidence PI, imagewise modulating the writing beam, shaping a writing spot having a minor axis of symmetry A and a major axis B, scanning the writing spot across the heat mode imaging element such that the minor axis A is substantially parallel to the mainscan direction X.

A system (1) for generating an image on a heat-mode imaging element, comprises means for carrying out the described method.

*FIG. 10*

EP 1 031 428 A1

**Description**

FIELD OF THE INVENTION

The present invention relates to heat mode recording on a heat mode imaging element allowing short exposure times. More specifically the invention relates to heat mode imaging using a coherent light radiation, as e.g. a laser beam, which is modulated by an input image data signal and which then is scanned across the heat mode imaging element with exposure times shorter than 1 µs. Still more specifically, the present invention applies to a heat mode imaging element comprising a thin metallic recording layer

BACKGROUND OF THE INVENTION

Recording materials have been disclosed on which records are made thermally by the use of intense radiation like laser beams having a high energy density. Information is recorded in such thermal recording or heat mode recording materials by creating differences in reflection and/or in transmission optical density on the recording layer. The recording layer has a high optical density and absorbs radiation beams which impinge thereon. The conversion of radiation into heat brings about a local temperature rise, causing a thermal change such as melting, evaporation or ablation to take place in the recording layer. As a result, the irradiated parts of the recording layer are totally or partially removed, and a difference in optical density is formed between the irradiated parts and the unirradiated parts.

The recording layer of such heat mode recording materials is usually made of metals, dyes, or polymers. Recording materials like this are described in "Electron, Ion and Laser Beam Technology", by M. L. Levene et al., The Proceedings of the Eleventh Symposium, 1969; "Electronics", March 18, 1968, p. 50; "The Bell System Technical Journal", by D. Maydan, vol. 50, 1971, p. 1761; and "Science", by C. O. Carlson, vol. 154, 1966, p. 1550.

Recording on such thermal recording materials is usually accomplished by converting the information to be recorded into electrical time series signals and scanning the recording material with a laser beam which is modulated in accordance with the signals. This method is advantageous in that recording images can be obtained on real time, i.e. instantaneously. Recording materials of this type are called "direct read after write" (DRAW) materials. DRAW recording materials can be used as a medium for recording an imagewise modulated laser beam to produce a human readable or machine readable record. Human readable records are e.g. microimages that can be read on enlargement and projection. An example of a machine readable DRAW recording material is the optical disc. For the production of optical discs, tellurium and its alloys have been used widely to form highly reflective thin metal films wherein heating with laser beam locally reduces reflectivity by pit formation. Also other metals, mostly relatively low melting metals, are suited for use in DRAW heat-mode recording. For example, bismuth (Bi) has been introduced in the production of a heat-mode recording layer.

By exposing such a recording element very shortly with a high-power laser the radiation is converted into heat on striking the bismuth layer surface. As a result the writing spot (also called exposure spot or shortly spot) ablates or melts a small amount of the bismuth layer. On melting the layer contracts on the heated spot by surface tension thus forming small cavitations or holes. As a result light can pass through these cavitations and the density is lowered to a certain minimum density value (Dmin) depending on the laser energy irradiated.

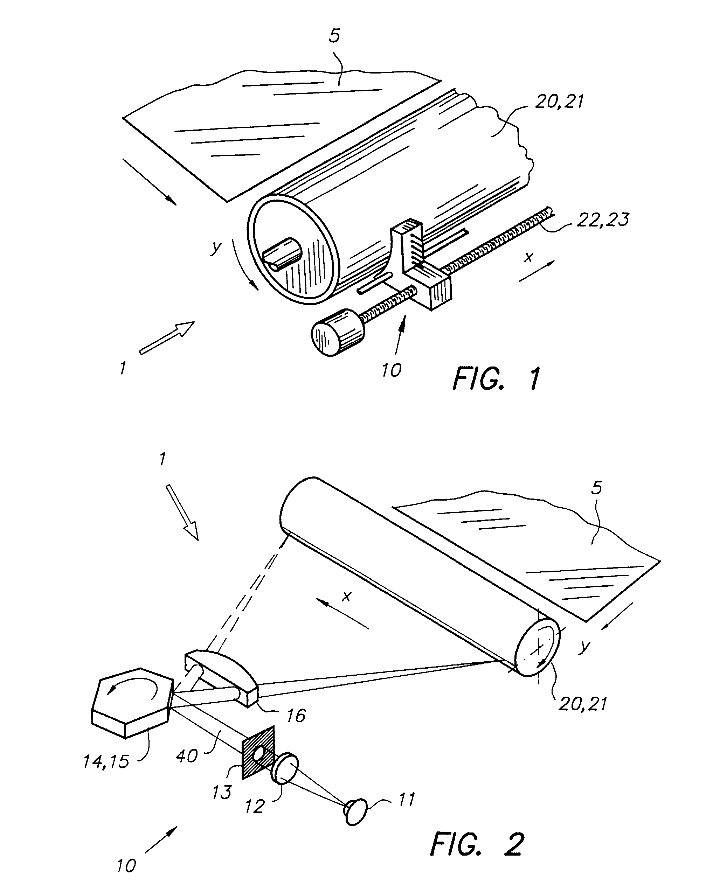

Exposing such a heat mode imaging element may be carried out with an external drum recorder as illustrated in Fig. 1, or in Fig. 2. Fig. 1 shows a perspective view of a first embodiment of an external drum recorder according to prior art, comprising a linearly moving diode laser. Fig. 2 shows a perspective view of a second embodiment of an external drum recorder according to prior art, comprising a flying spot laser.

In such a thermal recording system 1, a heat mode imaging element 5 is transported in a subscan direction Y through an exposure area 10 by a means 20 for transporting the imaging element, more in particular a rotating external drum 21. The radiation source, preferably a coherent light source 11, moves with a given scanning velocity $v_x$, in a mainscan direction X across the imaging element by a moving means 22, for example a lead screw 23. In general both directions X and Y are substantially perpendicular to each other.

Further, referral 12 indicates a collimator lens, 13 an aperture diaphragm, 14 a moving mirror (e.g. a polygon mirror 15, or a pentaprisme mirror, or a galvanometric mirror) and 16 a correction lens (e.g. a so-called f-θ lens).

Processes for the production of a heat mode recording material having "direct read after write" (DRAW) possibilities wherein a support is provided with a heat mode recording thin metal layer, preferably a bismuth layer, are disclosed e.g. in EP 0 384 041 and in EP-0 803 376 (both in the name of Agfa-Gevaert N.V.).

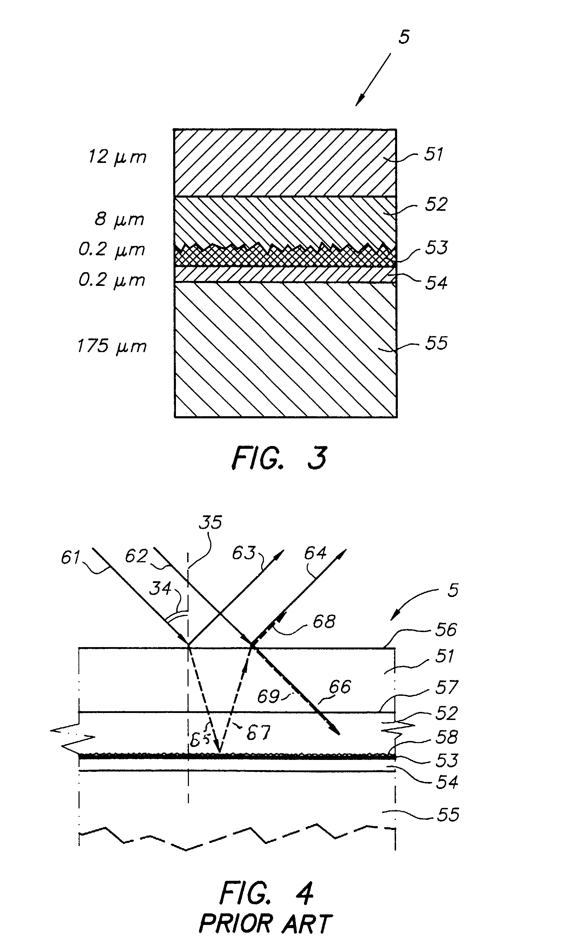

Commercially available DRAW-materials are e.g. known under the tradename MASTERTOOL™ (Agfa-Gevaert N.V.). MASTERTOOL MT8 is mostly used after recording as master in the manufacturing of microelectronic circuits and printed circuit boards. A cross-section of a composition of Mastertool MT8 is shown in Fig. 3 (not to scale). With reference to the description in "Mastertool: A new dry phototool in the production of printed circuit boards", journal Circuit World, ed. Wela Publications Ltd Vol. 22, No. 3, April 1996, pp. 26-32, the material of the heat mode imaging element 5 comprises a subbed polyethylene terephthalate (PET) support 55 of e.g. 175 µm, carrying a subbing layer 54 of

about 0.2 μm thickness, a bismuth layer 53 of about 0.2 μm thickness, a 8 μm thick weak adhesive layer 52, and a thin PET protective layer 51 of 12 μm thickness (also called top-layer TL).

Optionally, on the other side of the subbed PET support a backing layer is provided containing an antistatic and a matting agent (or roughening agent, or spacing agent, terms that often are used as synonyms) to prevent sticking.

A first problem inherent in using heat mode imaging elements, relates to thermal mass and thermal inertia which put a severe restriction on the throughput available for a thermal system with a defined power or energy level. So, it might already be difficult to obtain e. g. an average throughput of one print per minute in format A3 (format according to standards DIN 6771, ed. 1988 or ISO 5457 ed. 1980). This problem is still increased by heat losses to top and bottom layers during the exposing time.

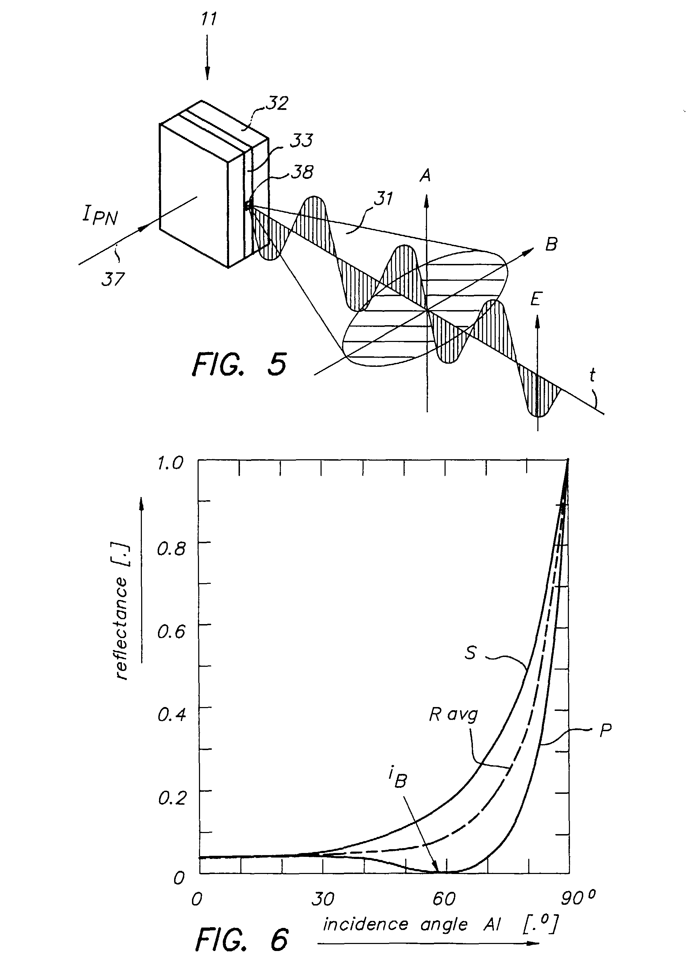

A second problem inherent in using heat mode imaging elements with a layered structure, relates to unwanted interference (see Fig. 4). This is created by reflections of the light on the top surface 56 and on the bottom surface 58 of the layers, occasionally also on any intermediate surface 57 of the layers. Unwanted interferences put severe restrictions on the quality of the outputted images. Fig. 4 shows a coherent light incident according to prior art upon a heat mode imaging element. In view of greater clarity, in Fig.4, the support layer 55 (cf. Fig. 3) is not illustrated completely.

For sake of good understanding, following referrals are used in Fig. 4: referral 35 indicating the normal to the point of incidence, 56 a top surface, 57 an intermediate surface, 58 a bottom surface, 61 a first incident ray, 62 a second incident ray, 63 a first top reflected ray, 64 a second top reflected ray, 65 a first transmitted ray, 66 a second transmitted ray, 67 a first bottom reflected ray, 68 a first bottom reflected top leaving ray, and referral 69 indicating a first bottom reflected top reflected ray.

OBJECTS OF THE INVENTION

It is an object of the present invention to provide a method and a system for generating an image on a heat-mode imaging element allowing short exposure times with an augmented throughput, without increasing the energy needed.

It is a further object of the invention to provide a method and a system for generating an image on a heat-mode imaging element without unwanted optical interferences.

SUMMARY OF THE INVENTION

The above mentioned objects are realised by a method and a system for generating an image on a heat mode imaging element having the specific features defined respectively in independent claim 1 and claim 6. Specific features for preferred embodiments of the invention are disclosed in the dependent claims.

Further advantages and embodiments of the present invention will become apparent from the following description and drawings.

BRIEF DESCRIPTION OF THE DRAWINGS

The invention will be described hereinafter with reference to the accompanying drawings (not to scale), which are not intended to restrict the scope of protection applied for by the present application.

Herein,

Fig. 1 shows a perspective view of a first embodiment of an external drum recorder according to prior art;

Fig. 2 shows a perspective view of a second embodiment of an external drum recorder according to prior art;

Fig. 3 shows a cross-section of a composition of a Mastertool material suitable for application within the present invention;

Fig. 4 shows a coherent light incident according to prior art upon a heat mode imaging element;

Fig. 5 shows a semiconductor laser and an emitted laser beam suitable for application within the present invention;

Fig. 6 shows reflectance-curves obtained by relating reflectance versus incidence angle in case of two media with refractive indexes of 1 and of 1,5 respectively;

Fig. 7 shows an enlarged view of a writing spot having a major axis B and a minor axis A, said minor axis A being parallel to mainscan direction X;

Fig. 8.1 and 8.2. show a first diagram of a writing beam incident nearly under a Brewster angle on a heat mode imaging element on an external drum recorder according to the instant invention;

Fig. 9.1 and 9.2 show a second diagram of a writing beam incident nearly under a Brewster angle on a heat mode imaging element on an external drum recorder according to the instant invention;

Fig. 10 shows a perspective view of an embodiment of an external drum recorder according to the present invention;

Fig. 11 shows a coherent light incident upon a heat mode imaging element according to the present invention.

DETAILED DESCRIPTION OF THE INVENTION

The description given hereinafter mainly comprises four chapters, namely (i) terms and definitions used in the present application, (ii) preferred embodiments of methods and apparatus for thermal recording according to the present invention, (iii) preferred embodiments of heat mode imaging elements suitable for use in a method according to the present invention, (iv) further applications of the present invention.

While the present invention will hereinafter be described in connection with preferred embodiments thereof, it will be understood that it is not intended to limit the invention to those embodiments.

(i) Explanation of terms and definitions used in the present application

As an aid to better understanding the discussion that follows, the meaning of some specific terms applying to the specification and to the claims are explained (in relation to Figs. 4 and 5).

The term "angle of incidence AI" is defined as being the angle between the incident light beam and the normal to the surface of the heat mode imaging element. A similar definition applies to the term "angle of refraction AR".

The term "plane of incidence PI" is defined as being the plane comprising the incident light beam (e.g. ref. 61 in Fig 4) and the transmitted beam (e.g. ref. 65) and/or the reflected light beam (e.g. ref. 63).

The term "index of refraction η", also called "the refractive index η", is "the ratio of the velocity vl of light or other radiation in the first of two media to its velocity v2 in the second as it passes from one into the other" (cit. Webster's third new international dictionary, Merriam Cy Publishers, Springfield, Mass., USA, ed. 1981).

$$\eta = v1 \, / \, v2 \qquad [1]$$

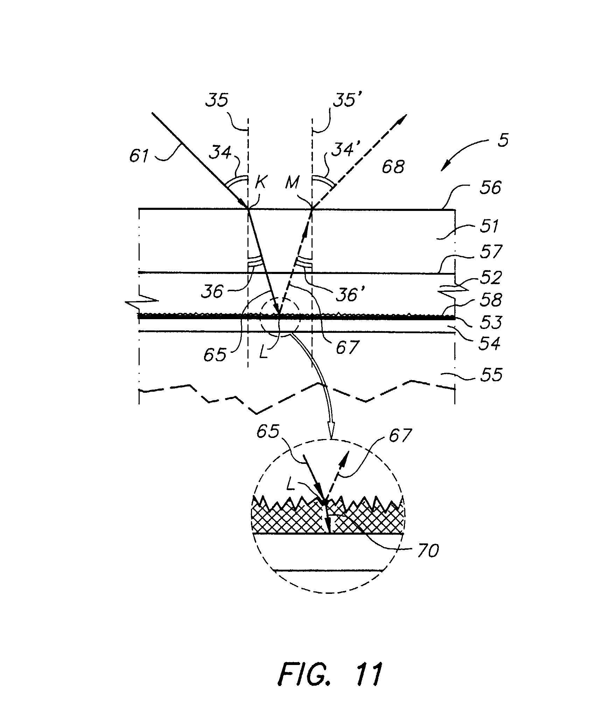

In the present application, it has been supposed, for a given wavelength, that the refractive indexes of protective layer 51 and of adhesive layer 52 are equal, so that in Figs. 4 and 11 no refraction appears at the intermediate layer 57.

According to Snell's law, also called the law of Snellius, "the ratio of the sines of the angles of incidence and refraction is constant for all incidences in any given pair of media for electromagnetic waves of a given frequency" (cit. Webster). Mathematically, it applies that

$$\sin AI \, / \, \sin AR = constant \qquad [2]$$

While defining some further terms, attention may be focused on Fig. 5, which is a diagram illustrating a coherent light source, e.g. a semiconductor laser 11 and an emitted light beam 31 suitable for application within the present invention. Herein, laser chip 32 has a cleavage plane 33. This means that the specific crystallisation substance of laser chip 32 has the quality of splitting readily in a definite direction and yielding surfaces always parallel to actual or potential crystallisation faces or planes (cf. Webster's third new international dictionary, Merriam Cy Publishers, Springfield, Mass., USA, ed. 1981).

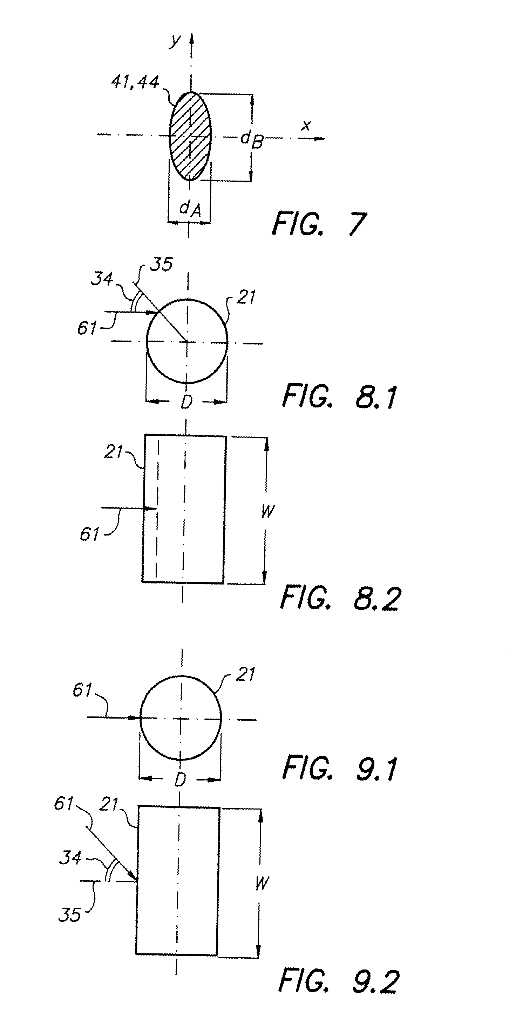

When a current IPN (ref. 37) is flowing through the PN-junction of the semiconductor, a coherent light beam 31 is generated through an emitting aperture 38 with dimensions of about e.g. 1 μm x 3 μm. The output light beam 31 of the semiconductor laser 11 is a divergent bundle of rays propagated in a transmission direction t. This bundle of rays has a divergent angle which is narrow in a direction A that is parallel to the cleavage plane 33 of the laser chip 32, and which is wide in a direction B perpendicular to the laser chip cleavage plane 33. For people skilled in the art, it may be clear that in Fig. 5, both directions A and B are thought to be perpendicular to each other (see also Fig. 7 to be explained later on).

As illustrated in Fig. 5, the output light beam 31 emitted from semiconductor laser 11 is also a linearly polarised light whose polarising direction (direction E of the electric field) is located in the A-direction. By the term "linear or plane polarisation" is meant an "action or process of affecting light or other transverse wave radiation so that the vibrations of the wave are confined to a single plane" (cit. Webster).

A beam of light is said to be "P-polarised" if the plane of polarisation PP (or more exactly, the electric vector E) is parallel to the plane of incidence PI (symbolically: PP // PI).

An example of a plane of polarisation PP is illustrated in Fig. 5 by the plane comprising electric vector E and transmission direction t.

A beam of light is said to be "S-polarised" if the plane of the polarisation PP is perpendicular to the plane of incidence PI (symbolically: PP ⊥ PI).

In relation to the above mentioned equations [1] and [2] a further physical law related to Brewster's angle applies in that, for a given wavelength,

$$tg \, \theta B = \eta 2 \, / \, \eta 1 \qquad [3]$$

In case that the first medium would have a refractive index equal to one (hence η1 = 1), then

$$tg \, \theta B = \eta 2 \qquad [4]$$

In the case of formula [4] the first medium might be air (with η1 = 1), and the second medium would be another (mostly an optical denser) medium.

A first meaning of the optical term "Brewster angle θB", also called "polarising angle", relates to the fact that "when unpolarized light of given wavelength is incident upon the surface of a transparent substance it experiences maximum plane polarisation at the angle of incidence AI whose tangent is the refractive index of that substance for that wavelength" (cit. Webster's third new international dictionary, Merriam Cy Publishers, Springfield, Mass., USA, ed. 1981).

A second meaning of the optical term "Brewster angle θB" relates to a second fact comprising that, (i) if polarised light is polarised in a plane parallel to the plane of incidence PI, and (ii) if the angle of incidence AI equals the Brewster angle θB, then no reflection beam will be generated.

(ii) Preferred embodiments of methods and apparatus for thermal recording according to the present invention

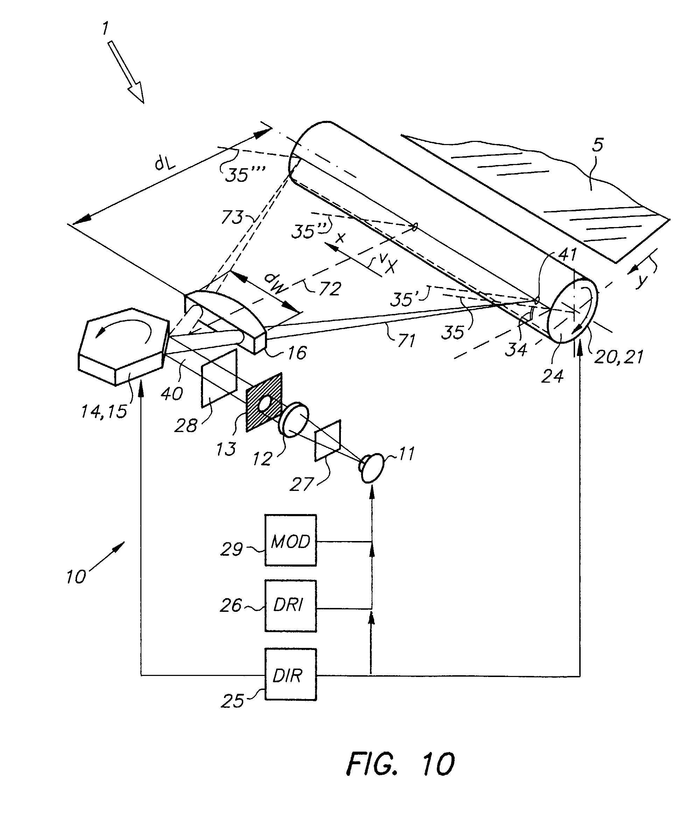

Referring to Fig. 10, the present invention first provides a method for generating an image on a heat-mode imaging element 5, comprising the steps of :

i) providing an exposure area 10 having a mainscan (or fast-scan) direction X and a subscan (or slow-scan) direction Y and comprising a coherent light source 11,

ii) transporting said imaging heat mode imaging element along said subscan direction Y through said exposure area,

iii) scanwise exposing said imaging heat mode imaging element, comprising the substeps of:

- generating a writing beam 40 from said light source,
- directing said writing beam onto the surface of said imaging heat mode imaging element under an incidence angle AI defined by the refraction indexes $\eta_i$ of the media through which said writing beam travels,
- linearly polarising said writing beam in a plane PP parallel to the plane of incidence PI (often also called "P-polarising"),
- imagewise modulating said writing beam of said coherent light source,
- shaping a writing spot 41 having a major axis of symmetry B and a minor axis A (thus $d_B \geq dA$),
- scanning said writing spot across the imaging heat mode imaging element such that said minor axis A is substantially parallel to said mainscan direction X.

It has to be emphasised that the above mentioned substeps are not necessarily in a strict sequential order. For people in the art, it may be clear that e.g. the substep of shaping the writing spot might be executed well before directing the writing beam onto the surface of the imaging element.

Secondly, the present invention also provides a thermal recording system 1, comprising:

i) an exposure area 10 having a mainscan direction X and a subscan direction Y and comprising a coherent light source 11,

ii) means for transporting 20 a heat mode imaging element 5 along said subscan direction through said exposure area,

iii) means for scanwise exposing said heat mode imaging element, comprising:

a) means DRI for generating (driver 26) a writing beam 40 from said light source,
b) means DIR for directing 25 said writing beam onto the surface of said imaging element under an incidence angle AI defined by the refraction indexes $\eta i$ of the media through which said writing beam travels,
c) means 27 for linearly polarising said writing beam in a plane PP parallel to the plane of incidence PI,
d) means MOD for imagewise modulating 29 said writing beam,
e) means 28 for shaping a writing spot having a major axis of symmetry B and a minor axis A,
f) means for scanning (see referrals 14, 15 or 22, 23) said writing spot across the heat mode imaging element such that said minor axis A is substantially parallel tot said mainscan direction X.

Once again, it has to be emphasised that the above mentioned means are not figured to scale and are not necessarily cited in a strict sequential nor geometrical order. For people in the art, it may be clear that e.g. the means 27 for linearly polarising the writing beam in a plane PP parallel to the plane of incidence PI in some circumstances may be superfluous (e.g. in case of a semiconductor-laser with a specific geometrical position relative to the plane of incidence PI).

In so far that Fig. 10 partially is quite similar to the already explained Fig. 2, no redundant description is repeated. In Fig. 10, referral 12 indicates a collimator lens, 13 an aperture diaphragm, 14 a moving mirror (e. g. a polygon mirror 15, or a pentaprisme mirror, or a galvanometric mirror, or a set of digital mirror devices DMD's), 16 a correction lens (e.g. a so-called f-θ lens or a flat-field lens, 17 a scan line on the heat mode imaging element, 26 a means for generating a writing beam (also called driver 26), 27 a means for polarising the writing beam, 28 a means for shaping the writing beam and referral 29 indicates a means for modulating (e.g. in intensity) the coherent light source 11.

The writing beam 40 is sketched in three positions, i.c. a writing beam 71 in starting position (or down-reflected position), a writing beam 72 in mid position (or undeflected position), and a writing beam 73 in end position (or up-deflected position). The normal 35 is additionally indicated in three corresponding positions, i.c. normal 35' in the starting position, normal 35" in the mid position, and 35''' in the end position.

As to the correction lens 16, it is well known, e.g. from the book "Laser Beam scanning", by Gerald F.

Marshall, ed. Marcel Dekker Inc., New York - Basel, 1985, pp. 73-74, that in polygonal scanners "an f-θ lens provides the following features: (i) a flat focal plane, (ii) a uniform spot diameter over the entire scan, and (iii) a linear spot velocity at the focal plane (assuming constant angular velocity of the entrance beam)".

Now, in reference to Fig.10, some further peculiarities have to be mentioned. First, the distance $d_L$ between correction lens 16 and the heat mode imaging element 5 on the means 20 for transporting, in practice, is rather large. Secondly, the width $d_W$ of a so-called f-θ lens is rather broad relative to the mainscan X-direction. By virtue of these two facts, the angle between the writing beam 71 in starting position, and the writing beam 73 in end position is rather small. Once again, the reader is warned that Fig. 10 is not to scale. Thirdly, by using such a f-θ lens, the incident beams 71-73 have an equal scanning velocity (say $v_X = v_{X71} = v_{X72} = v_{X73}$ =constant). By further consequence, it might be thought that writing beams 71 - 73 are parallel to each other. For sake of simplicity, let us focus our attention on a writing beam parallel to the mid position writing beam 72. It might be stated that, in case of transporting means 20 carried out by an external drum 21 in a perfect cylindrical geometry, all these normals 35-35''' are oriented radially. Now, the plane of incidence PI may be defined by the pairs of straight lines (71, 35') or (72, 35'') or (73, 35'''). Therefor, in each point of incidence on the drum, the plane of incidence PI is thought to be perpendicular to the X-axis (and hence, parallel to the end face 24 of the drum 21).

In Fig. 10, the plane of polarisation PP, which physically is defined by the coherent light source 11 and optionally by means 27 for polarising, has to be parallel to the plane of incidence PI.

If the present invention is applied with a polarised laser, e.g. a semiconductor, then suitable means may be provided for directing 25 the writing beam onto the surface of said imaging element under an incidence angle AI defined by the refraction indexes ηi of the media through which said writing beam travels. In practice, a geometrical control mechanism may carry out degrees of freedom as translation and/or rotation of e.g. the moving mirror 14 the external drum 21 relative to the coherent light source 11.

If the present invention would be applied with a non-polarised laser, e.g. a non-polarised ytterbium fibre laser, then such means 27 for polarising are very well necessary (e.g. by means of so-called halve-wavelength-grids λ/2).

It may be underscored that in a thermal recording system 1 according to the present invention, said means for transporting said heat mode imaging element along said subscan direction through said exposure area may comprise a rotating external drum or may comprise an internal drum with a rotating spot.

Fig. 11 shows a coherent light beam 61 incident upon a heat mode imaging element 5 according to the present invention. In so far that Fig. 11 is partially similar to the already explained Fig. 4, no redundant description is repeated.

For sake of greater clarity of Fig. 11, attention is focused on the facts that the angles 34 and 34' are equal (in fact 34 represents the incidence angle AI in a first point K and 34' represents the exit angle in a point M), that the normals 35 (in point K) and 35' (in point M) are parallel and that angles 36 and 36' are equal. In fact, 36 represents the exit angle in point K and 34' represents the incidence angle AI in point M.

It has to be noticed that, when incidence angle 34 equals the Brewster angle, reflection at the entrance is eliminated as described above (therefor, opposite to prior art as illustrated in Fig. 4, no beam 63 is shown in Fig. 11). By further consequence, exit angle 36 (or 36') equals the Brewster angle for the same wave with appropriate polarisation travelling the opposite direction, avoiding internal reflection at the exit of the layer (therefor, no beam 69 is shown in Fig. 11).

By doing so, it is a great advantage of the present invention that disturbing interferences are eliminated and, secondly, also that a greater portion of the incident energy (by means of incident beam 61) may penetrate in the recording layer 53 (cf. beam 70).

An enlarged view of the incidence, the reflection and the absorbency at point L at the boundary between the protective layer 51 or the adhesive layer 52 and the recording layer 53 is illustrated below Fig. 11.

As a result of the absorbed beam 70, the irradiated parts of the metallic layer 53 are totally or partially removed, and a difference in optical density is formed between the irradiated parts and the unirradiated parts, ranging from Dmin to Dmax.

A scanwise exposure according to the present invention mainly comprises a linewise and pixelwise progressing movement (also called "sweeping") of an exposure spot, originating e.g. from a laser-source and deflected f.e. by a moving mirror, a rotating prism, a galvanometer etc., in order to pixelwise heat the imaging.

Image-wise exposure in connection with the present invention is preferably an image-wise scanning exposure involving the use of a coherent light source (11) comprising a semiconductor- or diode-laser (optionally fibre coupled), a diode-pumped laser (as a neodenium-laser), or an ytterbium fibre laser. It is highly preferred in connection with the present invention to use a laser emitting in the infrared (IR) and/or near-infrared, i.e. emitting in the wavelength range 700-1500 nm. Suitable lasers include a Nd-YAG-laser (neodymium-yttrium-aluminium-garnet; 1064 nm) or a Nd-YLF-laser (neodymium-yttrium-lanthanum-fluoride; 1053 nm). Typical suitable laser diodes emit e.g. at 830 nm or at 860-870 nm.

As to the radiation source of the imaging heat mode imaging elements 5, instead of a laser 11, other kinds of infrared-type radiation beams might be used. For example, any monochromatic and coherent, highly focused or narrow width radiation source which has fast response characteristics in order to be suitable for modulation techniques.

In a preferred embodiment of the present invention, said imagewise modulating of the writing beam of said coherent light source 11 is carried out by imagewise modulating in intensity or in amplitude.

In a further preferred embodiment of the present said means 28 for shaping a writing spot 41 having a major axis of symmetry B and a minor axis A form an elliptic writing spot 44. Fig. 7 shows an enlarged view of a writing spot with dimensions $d_A$ and $d_B$ , wherein minor axis A is parallel to mainscan direction X.

During our experiments, we experienced that it was very advantageous, especially for a higher throughput, to shape the writing spot, having a major axis of symmetry B and a minor axis A, such that it becomes a "top-hat" writing spot.

In a preferred embodiment of the present invention, said shaping a writing spot 41 having a major axis of symmetry B and a minor axis A is carried out by diffractive optical elements (DOE). These are available from e.g. CSEM Swiss Center for Electronics and Microtechnology Inc., CH 2007 Neuchatel, Switzerland; or from BIFO Berliner Institut für Optik, D 12484 Berlin, Germany; or from Holocolor Ltd., 76114 Rehovot, Israel.

In a further preferred embodiment of the present invention, said minor axis A of the writing spot is as small as possible (being limited only by the optical system), but preferentially smaller than 4 $\mu$m (full width half height FWHM).

In order to obtain a high throughput (e.g. up to one print in format A3 - DIN 6771 / ISO 5457 pro minute) it is advantageous to implement the highest possible resolution, even in cases where this optionally should not augment the image quality. Several experiments showed that, for a given material and a predetermined power (say 150 mW per spot), an increasing of the spatial resolution (by decreasing the pitch and adapting the spotsize) from e.g. 3000 dpi to 4000 dpi in fact did increase also the throughput of "recorded images per time unit" (e.g. from 0.08 images/minute to 0.24 images/min wherein the images had an A3 size, which is about 297 mm x 420 mm).

Therefor, in another preferred embodiment of the present invention, said mainscan X has a spatial resolution higher than 4000 dpi (or 6.35 $\mu$m) and/or said subscan Y has a spatial pitch lower than 6.35 $\mu$m.

Fig. 6 shows reflectance-curves obtained by relating reflectance versus incidence angle AI in case of a given wavelength and refractive indexes $\eta i$ of 1/1,5, and is reproduced from the book "Optics and Lasers", Matt Young, Springer Verlag, fourth edition, 1993, pp. 227.

When a laser beam passes air (having a refractive index or optical index of refraction $\eta 1 = 1$) and enters a surface having a refractive index $\eta 2 = 1,5$ (as e.g. a thin film layer), the reflectance changes with the incidence angle AI and differs in accordance with the occurrence of P-polarisation versus the occurrence of S-polarisation. In the case of S-polarised light, the reflection loss increases as the angle of incidence AI increases. In the case of P-polarised light, the reflection loss decreases until a certain incident angle AI = $\theta$B, called Brewster angle, and then increases as the incident angle AI further increases. At the Brewster angle, light polarised parallel to the plane of incidence PI is totally transmitted, while light polarised perpendicular to the plane of incidence PI is partially reflected and partially transmitted. The curve Ravg illustrates the average value of reflectance losses, comprising the arithmetic mean of the P-curve and the S-curve.

At incidence angles AI between 0° and $\theta$B, reflection losses are rather small and flat. In relation to the present application, this means that the writing beam 40 is quite insensitive to reflectance caused by variations (or tolerances) of the incidence angle. The system has a rather large degree of freedom, the system is said to be "robust".

Depending on the exact type of layers, in most circumstances a Brewster angle $\theta$B between 50° and 70° can be calculated. In practice, thanks to the above mentioned flat portion of the reflectance graphs, even an incidence angle of about 45° already gives a remarkable reduction of reflectance losses. It may be stressed that in many drumrecorders an incidence angle AI of e. g. 45° is more easily realised, whereas an incidence angle AI of about 70° may be rather difficult to construct economically.

From the above, it might be clear that in a preferred embodiment of a method according to the present invention, the incidence angle AI approaches the Brewster-angle $\theta$B of the respective media (which is defined by the refraction indexes of the media through which said writing beam travels). In practice, the incidence angle AI should be within a range of ($\theta$B -15° to $\theta$B +15°), preferably within a range of ($\theta$B -10° to $\theta$B +10°), or more preferably within a range of ($\theta$B -5° to $\theta$B +5°). Of course, the optical best result would come from an incidence angle AI equal to the Brewster-angle $\theta$B of the respective media.

During the experiments one preferred embodiment of an external drum recorder based on the concept of Figs. 8.1-8.2 was designed as shown in the already discussed Figs. 10 and 11. Another preferred embodiment of an external drum recorder was based on the concept of Figs. 9.1-9.2, had a moving means 22 in the form of a lead screw 23 as shown in Fig. 2, and also applied the features of Fig. 11. The drums 21 had a diameter D between 100 and 200 mm, whereas the width W was between 200 and 500 mm.

Thermal recording can be carried out by means of different types of recording devices, e.g. a capstan type recorder, a flat bed type recorder, an internal drum recorder, or an external drum recorder. An extended description of such recording devices can be found e.g. in EP 0 734 148 (in the name of Agfa-Gevaert N.V.), so that in the present description any explicit and extensive replication is superfluous.

An imaging apparatus suitable for image-wise exposing in accordance with the present invention preferably includes a laser output that can be provided directly to the imaging heat mode imaging elements surface via lenses or other beam-guiding components, or transmitted to the surface of a imaging heat mode imaging element 5 from a remotely sited laser using a fibre-optic cable. A controller and associated positioning hardware maintains the beam output at a precise orientation with respect to the imaging heat mode imaging elements surface, scans the output over the surface, and activates the laser at positions adjacent selected points of the imaging heat mode imaging element 5. The controller responds to incident image signals corresponding to the original document and/or picture which is copied onto the imaging heat mode imaging element 5 to produce a precise negative or positive image of that original.

(iii) Preferred embodiments of heat mode imaging elements suitable for use in a method according to the present invention

The present application preferably can be applied to most kinds of heat mode imaging elements, especially to those heat mode imaging elements which show a so-called "threshold-characteristic".

A highly preferred embodiment according to the present invention uses a heat mode imaging element 5 which comprises, at least (i) a transparent support, (ii) a thin metallic recording layer, and (iii) a protective layer. Generally, also comprised are e.g adhesive layers. Optionally, said heat mode imaging element further comprises a layer containing a roughening agent.

Useful transparent (e.g. organic resin)) supports include e.g. cellulose nitrate film, cellulose acetate film, polyvinylacetal film, polystyrene film, polyethylene terephthalate film, polycarbonate film, polyvinylchloride film or poly-Alpha-olefin films such as polyethylene or polypropylene film.

By metallic layer is meant a layer based on a metal, a metal oxide, a metal chalcogenide such as a sulphide, an alloy of at least two metals, or mixtures of these different species.

Possible metals for the recording layers in this invention include Mg, Sc, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Sn, As, Sb, Bi, Se, Te. These metals can be used alone or as a mixture or alloy of at least two metals thereof. Due to their low melting point Mg, Zn, In, Sn, Bi and Te are preferred.

As the most preferred metal for the practice of this invention is bismuth, in a method according to the present invention, said thin metallic layer comprises bismuth. Even more preferentially, said thin metallic layer is a bismuth layer having a thickness between 0.05 and 0.60 $\mu$m.

When this thickness is too low the not exposed areas of the recorded heat mode element do not have sufficient density: the initial optical density Dmax is said to be too low. When on the other hand the thickness is too high the sensitivity tends to decrease and the minimal density after laser recording on the exposed areas tends to be higher: the optical density Dmin is said to be too high. In some of the experiments a 0.3 $\mu$m thick bismuth layer was deposited by evaporation in vacuum ($10^{-3}$ bar) in a LEYBOLD-HERAEUS type 1140 apparatus.

The heat mode imaging element 5 can be exposed through the permanent support, being the dark bismuth side which is energetically favourable.

The metal recording layer may be applied by vapour deposition, sputtering, ion plating, chemical vapour deposition, electrolytic plating, or electroless plating. In the preferred case of bismuth the recording layer is preferably provided by vapour deposition in vacuum. A method and an apparatus for such a deposition are disclosed in EP 0 384 041 cited above.

During some further experiments the heat mode recording materials were image-wise exposed by means of an NdYLF laser having following recording parameters :

- P-polarised beam;
- pitch : 3175 dpi (full areas), 200 dpi (single scan lines);
- recording speed 14 m/s ;
- power output on film : 400 mWatt ;
- spot diameter ($1/e^2$) : 16 $\mu$m ;
- angle of incidence Al 55 °;
- heat-mode imaging element MASTERTOOL MT8 ™,
- having a refractive index $\eta$=1,4 .

The results of different recording samples may be summarised as follows:

- sensitivity about 1.7 x $10^6$ mJ/m2,
- quality of single scan lines (ref 17) not or slightly frayed,
- in neither of the described cases (cf. embodiments of Figs 8-10) a disturbing interference pattern occurred: exposure at the energetically favourable dark bismuth side is possible without the occurrence of interference patterns.

Having described in detail preferred embodiments of the current invention, it will now be apparent to those skilled in the art that numerous modifications can be made therein without departing from the scope of the invention as defined in the appending claims.

(iv) Further applications of the present invention.

As mentioned before, the instant invention can be applied in heat mode recording systems 1 requiring short exposure times and/or in heat mode recording systems suffering from unwanted interferences.

Indeed, two advantages of the present invention comprise (i) an allowance of short exposure times with an augmented throughput, without increasing the energy needed, and (ii) a recording which is hardly sensitive to the occurrence of disturbing interference patterns.

Important fields of application of the present invention comprise processes for obtaining a heat mode image that can be used as a master for the exposure of a printing plate or of a graphic arts contact film based on silver halide chemistry, or as a master for printed circuit boards-applications (PCB).

The present invention of a method for thermal recording, also may be applied in other fields with other types of thermo-sensitive recording materials. For example, so-called "laser induced melt transfer LIMT" may be indicated. A discussion about LIMT may be read in "Characteristics of thermal transfer printing by laser heating" (Irie, Ochia & Kitamura), 1993.02.05, pp. 117-123, or in "Study of characteristics of laser induced melt transfer printing" (Sumiya, Hoshikawa & Kaneko), 1992-02-21, pp. 8-14.

While further modifications will become possible for those skilled in the art after receiving the teachings of the present disclosure, certain changes and modifications still can be made without departing from the spirit and scope of the invention as defined by the following claims.

Reference parts list

| 1 | thermal recording system |
|---|---|
| 5 | heat mode imaging element |
| 10 | exposure area |
| 11 | coherent light source |
| 12 | collimator lens |
| 13 | aperture diaphragm |
| 14 | moving mirror |
| 15 | polygon mirror |
| 16 | correction lens |
| 17 | scan line |
| 20 | means for transporting |
| 21 | external drum |
| 22 | moving means |
| 23 | lead screw |
| 24 | end surface of the drum |
| 25 | means for directing |
| 27 | means for polarising |
| 28 | means for shaping |
| 29 | means for modulating |

| 31 | output (light) beam |
|---|---|
| 32 | laser chip |
| 33 | cleavage plane |
| 34 | incidence angle |
| 34' | angle equal to 34 |
| 35 | normal |
| 35', 35'', 35''' | normal in other points of incidence |
| 36 | exit angle |
| 36' | angle equal to 36 |
| 37 | current IPN |
| 38 | emitting aperture |
| 40 | writing beam |
| 41 | writing spot |
| 42 | major axis B |
| 43 | minor axis A |
| 44 | elliptic writing spot |
| 51 | protective layer |
| 52 | adhesive layer |
| 53 | metallic layer |
| 54 | subbing layer |
| 55 | support layer |
| 56 | top surface |
| 57 | intermediate surface |
| 58 | bottom surface |
| 61 | first incident ray |
| 62 | second incident ray |
| 63 | first top reflected ray |
| 64 | second top reflected ray |
| 65 | first transmitted ray |
| 66 | second transmitted ray |
| 67 | first bottom reflected ray |
| 68 | first bottom reflected top leaving ray |
| 69 | first bottom reflected top reflected ray |
| 70 | absorbed beam |
| 71 | writing beam in starting position |
| 72 | writing beam in mid position |
| 73 | writing beam in end position. |

**Claims**

**1.** A method for generating an image on a heat-mode imaging element (5), comprises the steps of :

i) providing an exposure area (10) having a mainscan direction X and a subscan direction Y and comprising a coherent light source (11),
ii) transporting said heat mode imaging element along said subscan direction Y through said exposure area,
iii) scanwise exposing said heat mode imaging element, comprising the substeps of:

- generating a writing beam (40) from said light source,

- directing said writing beam onto the surface of said imaging element under an incidence angle AI (34) defined by the refraction indexes $\eta_i$ of the media through which said writing beam travels,
- linearly polarising said writing beam in a plane PP parallel to the plane of incidence PI,
- imagewise modulating said writing beam,
- shaping a writing spot (41) having a major axis of symmetry B and a minor axis A,
- scanning said writing spot across the heat mode imaging element such that said minor axis A is substantially parallel to said mainscan direction X.

2. A method according to claim 1 wherein said heat mode imaging element (5) comprises: (i) a transparent support (55),
(ii) a thin metallic recording layer (53), and (iii) a protective layer (51).

3. A method according to claim 2, wherein said thin metallic recording layer (53) comprises bismuth.

4. A method according to claim 1, wherein said coherent light source (11) comprises a semiconductor- or diode-laser, a diode-pumped laser, or an ytterbium fibre laser.

5. A method according to claim 1, wherein said incidence angle AI (34) approaches the Brewster-angle $\theta B$ of the respective media.

6. A thermal recording system (1) comprises

   i) an exposure area (10) having a mainscan direction X and a subscan direction Y and comprising a coherent light source (11),
   ii) means for transporting (20) a heat mode imaging element (5) along said subscan direction through said exposure area,
   iii) means for scanwise exposing said heat mode imaging element, comprising:

      a) means for generating (26) a writing beam from said light source,
      b) means for directing (25) said writing beam onto the surface of said imaging element under an incidence angle AI (34) defined by the refraction indexes $\eta_i$ of the media through which said writing beam travels,
      c) means for linearly polarising (27) said writing beam in a plane PP parallel to the plane of incidence PI,
      d) means for imagewise modulating (29) said writing beam,

      e) means for shaping (28) a writing spot having a major axis of symmetry A and a minor axis B,
      f) means for scanning (14, 15) said writing spot across the heat mode imaging element such that said minor axis A is substantially parallel tot said mainscan direction X.

7. A thermal recording system (1) according to claim 6, wherein said means for transporting (20) said heat mode imaging element (5) along said subscan direction through said exposure area comprises a rotating external drum (21) or an internal drum.

8. A thermal recording system (1) according to claim 6, wherein said means for shaping (28) a writing spot (41) having a major axis of symmetry B (42) and a minor axis A (43) form an elliptic writing spot (44).

9. A thermal recording system (1) according to claim 6, wherein said means for shaping (28) a writing spot (41) having a minor axis of symmetry A (42) and a major axis B (43) form a "top-hat" writing spot.

10. A thermal recording system (1) according to claim 9, wherein said top-hat writing spot is obtained by means of diffractive optical elements (DOE).

FIG. 1

FIG. 2

5

12 μm — 51

8 μm — 52

0.2 μm — 53

0.2 μm — 54

175 μm — 55

FIG. 3

35

61  62  63  64

34

5

68  56

51

57

69  66  52

58

65  67  53

54

55

FIG. 4
PRIOR ART

FIG. 5

FIG. 6

FIG. 7

FIG. 8.1

FIG. 8.2

FIG. 9.1

FIG. 9.2

FIG. 10

FIG. 11

**European Patent Office**

## EUROPEAN SEARCH REPORT

Application Number

EP 99 20 0495

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | WO 95 31013 A (POLAROID CORP) 16 November 1995 (1995-11-16) * page 7, line 21 - line 29; figure 7 * * page 10, line 10 - page 11, line 6; figures 10,11 * | 1,6 | B41J2/475 |
| A | EP 0 577 528 A (EASTMAN KODAK CO) 5 January 1994 (1994-01-05) * column 1, line 20 - line 40 * | 1 | |
| D,A | EP 0 384 041 A (AGFA GEVAERT NV) 29 August 1990 (1990-08-29) * column 4, line 19 - column 9, line 10; figure 2 * | 2,3 | |
| A | US 5 668 590 A (MARUO SEIJI  ET AL) 16 September 1997 (1997-09-16) * column 10, line 24 - column 12, line 6; figures 11,12 * * column 3, line 14 - column 7, line 41; figures 1,2 * | 5 | |
| A | EP 0 589 725 A (MINNESOTA MINING & MFG) 30 March 1994 (1994-03-30) * column 13, line 34 - column 14, line 38; figures 1-4 * | 6-8 | TECHNICAL FIELDS SEARCHED B41J |

The present search report has been drawn up for all claims

| Place of search | Date of completion of the search | Examiner |
|---|---|---|
| THE HAGUE | 21 July 1999 | De Groot, R |

EPO FORM 1503 03.82 (P04C01)

**ANNEX TO THE EUROPEAN SEARCH REPORT
ON EUROPEAN PATENT APPLICATION NO.**                    EP 99 20 0495

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-1999

| Patent document cited in search report | | Publication date | Patent family member(s) | | | Publication date |
|---|---|---|---|---|---|---|
| WO 9531013 | A | 16-11-1995 | AU | 2382795 | A | 29-11-1995 |
| | | | CA | 2193108 | A | 16-11-1995 |
| | | | EP | 0759246 | A | 26-02-1997 |
| | | | US | 5652612 | A | 29-07-1997 |
| EP 0577528 | A | 05-01-1994 | US | 5420611 | A | 30-05-1995 |
| | | | DE | 69305584 | D | 28-11-1996 |
| | | | DE | 69305584 | T | 15-05-1997 |
| | | | JP | 6064194 | A | 08-03-1994 |
| | | | US | 5644353 | A | 01-07-1997 |
| EP 0384041 | A | 29-08-1990 | DE | 68916530 | D | 04-08-1994 |
| | | | DE | 68916530 | T | 24-11-1994 |
| | | | JP | 2266979 | A | 31-10-1990 |
| | | | US | 5147490 | A | 15-09-1992 |
| US 5668590 | A | 16-09-1997 | JP | 7084200 | A | 31-03-1995 |
| | | | JP | 7144434 | A | 06-06-1995 |
| EP 0589725 | A | 30-03-1994 | DE | 69312614 | D | 04-09-1997 |
| | | | DE | 69312614 | T | 19-03-1998 |
| | | | JP | 6191064 | A | 12-07-1994 |
| | | | US | 5475418 | A | 12-12-1995 |

EPO FORM P0459

For more details about this annex : see Official Journal of the European Patent Office, No. 12/82